(19) Europäisches Patentamt
European Patent Office
Office européen des brevets

(11) **EP 3 342 734 B1**

(12) **EUROPEAN PATENT SPECIFICATION**

(45) Date of publication and mention
of the grant of the patent:
**15.02.2023 Bulletin 2023/07**

(21) Application number: **16207385.2**

(22) Date of filing: **29.12.2016**

(51) International Patent Classification (IPC):
**B65G 43/02** *(1968.09)* **B08B 9/42** *(1990.01)*

(52) Cooperative Patent Classification (CPC):
**B65G 43/02; B08B 9/30; B08B 9/423**

(54) **CHAIN CONVEYOR FOR CONVEYING A PLURALITY OF ARTICLES AND METHOD FOR DETECTING THE WEAR CONDITION OF THE CHAIN CONVEYOR**

KETTENFÖRDERER ZUM FÖRDERN MEHRERER ARTIKEL UND VERFAHREN ZUR ERKENNUNG DES VERSCHLEISSZUSTANDS DES KETTENFÖRDERERS

CONVOYEUR À CHAÎNE SERVANT À TRANSPORTER UNE PLURALITÉ D'ARTICLES ET PROCÉDÉ DE DÉTECTION DE L'ÉTAT D'USURE DU CONVOYEUR À CHAÎNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.07.2018 Bulletin 2018/27**

(73) Proprietor: **Sidel End of Line & Tunnels Solutions Srl**
**43126 Parma (IT)**

(72) Inventor: **BERZAGHI, Claudio**
**37139 VERONA (IT)**

(74) Representative: **Sidel Group**
**c/o Gebo Packaging Solutions France**
**5-7 Rue du Commerce**
**ZI - CS 73445 Reichstett**
**67455 Mundolsheim Cedex (FR)**

(56) References cited:
**EP-A1- 2 727 660    WO-A2-2008/024685**
**JP-A- H10 300 426    US-A- 2 444 925**
**US-A- 2 984 334    US-A1- 2012 186 613**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a chain conveyor for conveying a plurality of articles, in particular empty containers intended to be filled with a pourable product, in particular a pourable food product.

The present invention also relates to a method for detecting the wear condition of a chain conveyor for conveying a plurality of articles.

The chain conveyor is preferably incorporated into a washing machine for cleaning the empty containers upstream of a filling and a labelling station, in which the containers are respectively filled with the pourable product and labelled with respective labels.

Washing units are known, e.g. from EP2727760, comprising:

- a washing tunnel;
- a looped chain conveyor for advancing the articles along a closed path and which extends inside the washing tunnel; and
- a plurality of successive treatment zones through which the chain conveyor advances the articles.

The chain conveyor is fed with articles to be washed at an input station of the washing tunnel and outputs washed articles to an output station.

The treatment zones are arranged between the input station and the output station.

Also known from US2444925 and JPH10300426 are machines for sterilizing and washing container with a roller chain conveyor.

Also known from US 2012/0186613 A1 is a chain conveyor as defined in the preamble of claim 1.

In detail, the treatment zones comprise: a prewash zone, a first cleaning zone, a second cleaning zone and a final rinsing zone.

The prewash zone, the first cleaning zone, the second cleaning zone comprise respective baths filled with a chemical agent and through which the containers are advanced.

The final rinsing zone comprises spraying means for spraying liquid chemical agents on the advancing containers.

The chain conveyor basically comprises:

- a plurality of conveying beams, each of which carries a plurality of containers and is elongated orthogonally to the path of the conveyor chain; and
- a pair of chains, which are arranged at lateral opposite sides of conveying beams and extend parallel to the path of the conveyor chain.

In detail, each chain comprises, in turn,:

- a plurality of successive bushes fitted to and surrounding respective pins;
- a plurality of successive rollers which roll onto the guide and are rotatably mounted on respective bushes;
- a plurality of first links, which connect opposite lateral sides of respective pairs of subsequent bushes; and
- a plurality of second links, which connect opposite lateral sides of respective pairs of subsequent pins.

In particular, each bush is connected, by respective first links either to the upstream or to downstream bush of the relative chain, while the corresponding pin is connected by means of respective second links either to the downstream or to upstream pin of the relative chain.

Each conveying beam is fitted on opposite sides or ends thereof to the second links of the first chain and of the second chain.

Even well performing, the above-identified solution of chain conveyor leaves room for improvement.

As a matter of fact, the proper operation of the chain conveyor can be affected by the wear effects between the rollers and the respective bushes.

In the worst cases, the wear effects can lead to the sudden break of the chain conveyor break.

In order to contain the risk of break, the chain conveyor is periodically checked by an operator and replaced in case the wear effect represents a danger for the chain.

However, the time needed for the order and the delivery of a new chain are considerable.

Thus, the operation of washing machine must be interrupted for a considerable amount of time.

This interruption inevitably penalizes the throughput of the filling/labelling unit, which are arranged downstream of the output station of the chain conveyor.

A need is therefore felt within the industry for a chain conveyor for conveying a plurality of articles, which allows to eliminate the aforesaid drawback in a straightforward, low-cost manner.

It is an object of the present invention to provide a chain conveyor for conveying a plurality of articles, which meets the above requirements.

The aforementioned object is achieved by the present invention as it relates to a chain conveyor for conveying a plurality of articles, as claimed in claim 1.

The invention also relates to a method for detecting the wear condition of a chain conveyor for conveying a plurality of articles, as claimed in claim 10.

One preferred embodiment is hereinafter disclosed for a better understanding of the present invention, by way of non-limitative example and with reference to the accompanying drawings, in which:

- Figure 1 is a lateral view of a washing unit with a chain conveyor in accordance with the invention, with parts removed for clarity;
- Figure 2 is a perspective view of the chain conveyor of Figure 1, with parts removed for clarity; and
- Figures 3 and 4 are transversal section taken along line III-III of Figure 2 showing the chain conveyor of Figures 1 and 2 in the different wear conditions.

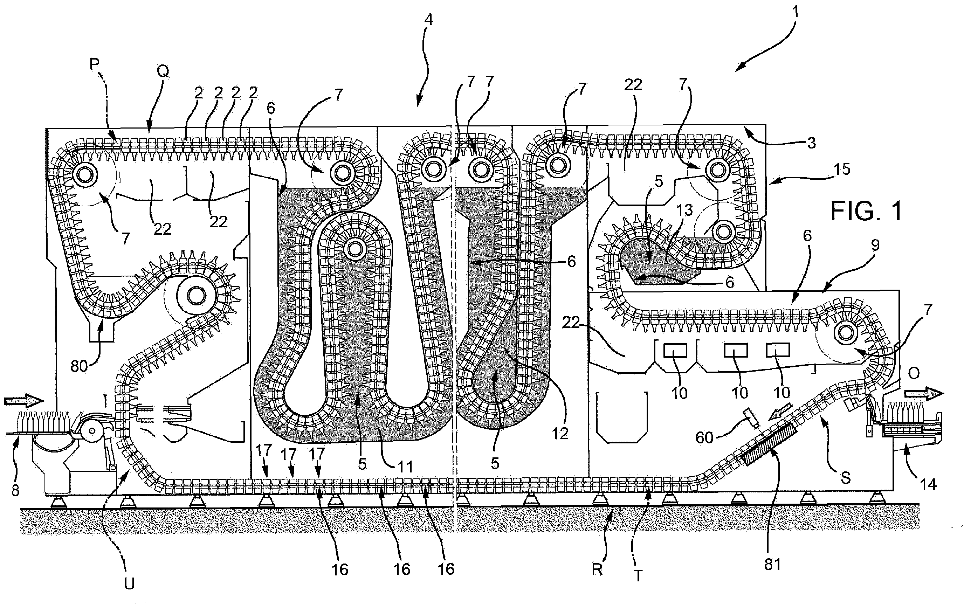

With reference to figure 1, numeral 1 indicates a washing unit for washing articles 2, in particular empty containers intended to be filled with a pourable product.

Washing unit 1 substantially comprises:

- a washing tunnel 3, in which articles 2 are washed;
- a chain conveyor 4 for advancing articles 2 inside washing tunnel 3 along a closed loop path P; and
- a plurality of treatment zones 5, which are arranged in washing tunnel 3 and comprise, in the embodiment shown, respective tanks 6 filled with respective cleaning agent and through which chain conveyor 4 advances articles 2.

Washing unit 1 also comprises:

- an infeed conveyor 8, which feeds a sequence of rows of articles 2 to be cleaned to chain conveyor 4 at an input station I of washing tunnel 3; and
- an outfeed conveyor 14, which receives a sequence of rows of cleaned articles 2 from chain conveyor 4 at an output station O of washing tunnel 3.

Path P comprises a work branch Q and a return branch R.

Work branch Q extends from input station I to output station O while return branch R extends from output station O to return station I.

In the embodiment shown in Figure 1, path P lies on a vertical plane, and conveyors 8, 14 advance articles 2 along a horizontal direction.

In particular, treatment zones 5 comprise a prewash zone, a first cleaning zone, a second cleaning zone.

The prewash zone, the first cleaning zone, the second cleaning zone comprise respective baths 11, 12, 13 filled with a cleaning agent.

For a better understanding, in Figure 1, the volume occupied by the cleaning solution has been highlighted by colouring the relative cross section in grey.

Due to the temperature of the cleaning agent, articles 2 are heated up as they travel inside bath 11, 12, 13.

Treatment zones 5 also comprise a rinsing zone 9, which is aimed to remove the chemical agents out of articles 2 and to cool them down. Rinsing zone 9 comprises a plurality of sprinkling device 10 acting one after the other on articles 2.

Chain conveyor 4 advances empty articles 2 along work branch Q and returns without articles 2 along return branch R.

Bath 11, 12, 13 and rinsing zone 9 are arranged, in this succession, along work branch Q of path P.

As evident from Figure 1, as they are advanced along work branch Q by chain conveyor 4, articles 2 can be arranged upside-down.

Furthermore, chain conveyor 4 comprises, along work branch Q,:

- a plurality of driven and driving wheels 7, which mesh with conveyor chain 4 and causes the movement thereof along path P; and
- a plurality of stationary supporting structures 22, which interacts with conveyor chain 4 to prevent the bending thereof.

Return branch R of path P comprises, proceeding from station O to station I:

- a descending portion S;
- a substantially horizontal portion T; and
- an ascending portion U.

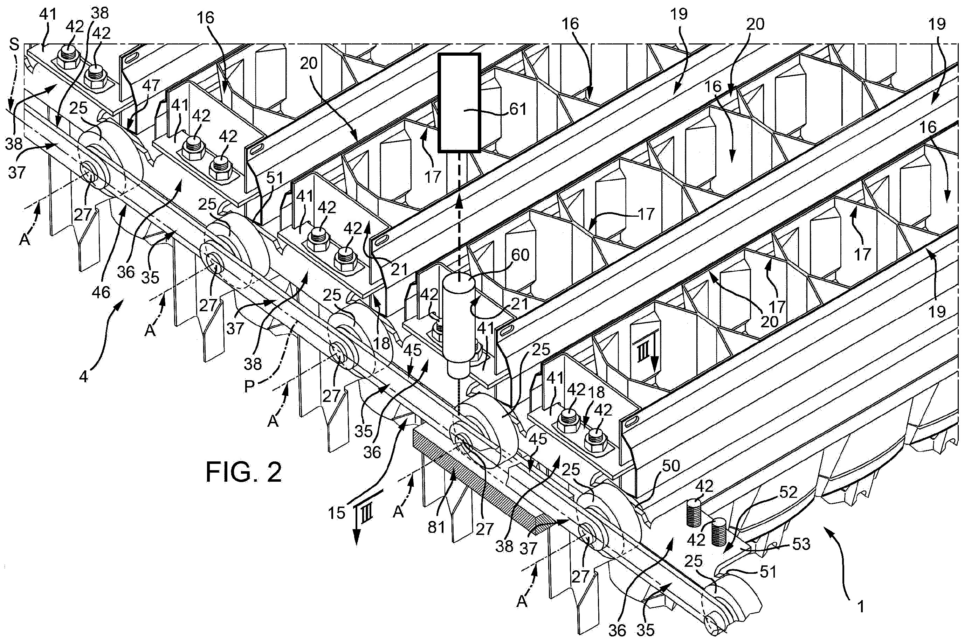

With reference to Figures 1 and 2, chain conveyor 4 comprises:

- a pair of chains 15 (only one of which is shown in Figure 2) elongated parallel to path P and parallel to one another; and
- a plurality of subsequent conveying beams 16, which extend between chains 15 and orthogonally to chains 15 and path P.

Chain conveyor 4 further comprises a stationary guide 80 for supporting chains 15.

Guide 80 is shaped in the same way as path P.

Each beam 16 comprises a plurality of seats 17 for holding relative articles 2.

Seats 17 are aligned orthogonally to path P. Accordingly, also articles 2, when conveyed along work branch Q, are aligned onto relative beams 16 orthogonally to path P.

In particular, each beam 16 comprises (Figure 2):

- a plate 18 onto which seats 17 are arranged and lying on a plane orthogonal to path P;
- an upstream crossbar 19, which protrudes orthogonally from plate 18 and bounds seats 17 on the upstream side thereof, with reference to the advancing direction of chain conveyor 4 along path P;
- a downstream crossbar 20, which protrudes orthogonally from plate 18 on the opposite side of crossbar 19, and bounds seats 17 on the downstream side thereof, with reference to the advancing direction of chain conveyor 4 along path P; and
- a pair of lateral crossbars 21, which protrude orthogonally from plate 18, lie on respective planes orthogonal to crossbars 19, 20 and are interposed between crossbars 19, 20.

In detail, downstream crossbars 19, 20 are formed in two pieces, one of which is folded towards the opposite side of seats 17.

Crossbars 21 of each beam 16 are arranged one on the side of one chain 15 and the other on the side of the other chain 15.

Being chains 15 identical to one another, only one chain 15 will be described in the following of the present description.

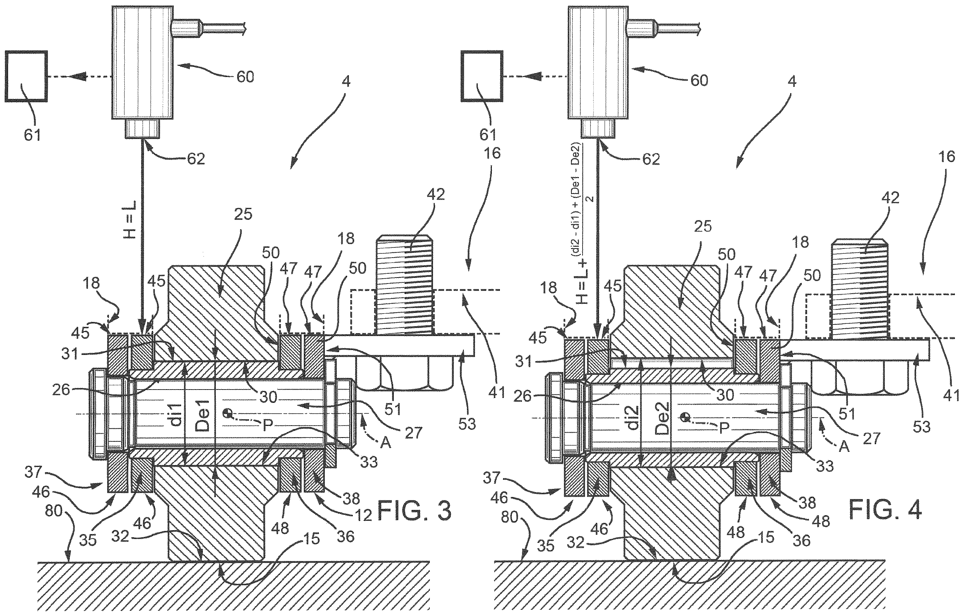

Chain 15 substantially comprises (Figures 3 and 4):

- a plurality of consecutive hollow rollers 25 rolling onto guide 80 about respective axes A orthogonal to path P;
- a plurality of consecutive hollow bushes 26 (shown only in Figures 3 and 4) onto which relative rollers 25 are rotatably mounted with respect to relative axes A; and
- a plurality of pins 27 onto which bushes 26 are fitted, without possibility of relative rotational movement.

Each roller 25 surrounds relative axle possibly formed by a bush 26, which in turn surrounds relative pins 27. Generally speaking, each roller 25 is rotatably mounted on an axle, possibly in the shape of a bush 26 surrounding a pin 27.

Each assembly formed by a roller 25, relative axle or bush 26 and relative pin 27 extends about a common relative axis A.

Each roller 25 comprises a relative inner surface 30 with respect to relative axis A.

Each axle or bush 26 comprises a relative outer surface 31 with respect to relative axis A.

Surface 30 of each roller 25 rolls over surface 31 of relative axle or bush 26.

Surfaces 30, 31 are cylindrically shaped and have respective diameters di, De, which change with the time due to the wear effect.

In particular, diameter di increases with the time due to the wear effect while diameter De of the axle or bushing 26 decreases with the time due to the wear effect.

As evident from Figures 3, when wear effect are neglectable, diameter di equals value di1 while diameter De equals value De1. In this condition di1 substantially equals De1.

Due to the wear effect (Figure 4), diameter di reaches value di2 higher than di1 while diameter De1 reaches value De2 smaller than De1.

In this way, a radial gap (magnified in Figure 4 for the sake of clarity) between surfaces 30, 31 is generated due to the wear effects.

As evident from Figure 4, each radial gap extends on the side of surface 31 of relative axle or bush 26 which is opposite to guide 80.

Each roller 25 also comprises an outer surface 32 which is opposite to inner surface 30 and rolls onto guide 80.

A bush 26 also comprises an inner surface 33, which is opposite to surface 31 and is fitted onto relative pin 27. An axle may form the merging of a bush 26 and relative pin 27.

Each axle or bush 26 is connected to the immediately upstream (downstream) axle or bush 26 by means of a pair of links 35, 36 parallel to one another and arranged on relative opposite axial sides of axle or bush 26 with respect to relative roller 25.

Each pin 27 is connected to the immediately downstream (upstream) pin 27 by means of a pair of links 37, 38 parallel to one another and arranged on relative opposite sides of bush 26 with respect to relative roller 25.

Links 35, 36 are, with reference to roller 25 and bush 26 shown in Figures 3 and 4, axially interposed between corresponding links 37, 38.

Links 35, 37 are arranged on the opposite side of relative roller 25 with respect to relative beam 16.

In particular, links 37 are arranged on the opposite side of relative links 35 with respect to corresponding roller 25.

Each link 35, 37 extends parallel to path P.

Links 35, 37 are bounded by respective surfaces 45, 46 opposite to one another with respect to relative axis A.

Surface 45 of each link 35, 37 is arranged on the side of seats 17 of respective beam 16 while surface 46 is arranged on the opposite side of seats 17 and on the side of guide 80.

Links 35, 37 are alternate to one another, proceeding along path P of conveyor chain 4.

Links 36, 38 are arranged on the same side of relative roller 25 with respect to relative beam 16.

Links 36 is arranged on the opposite side of relative links 38 with respect to corresponding beams 16.

Each link 36, 38 comprises:

- a pair of ends 50, 51 (Figure 2) fitted to respective consecutive bushes 26 (or pins 27, or axles) bound by respective surfaces 47, 48 (Figures 3 and 4) arranged respectively on the side of relative beam 16 and the side of guide 80;
- a main body 52, which is arranged between portions 50, 51 along path P; and
- a portion 53 which laterally protrudes from body 52 towards relative beam 16 and is screwed to a lateral end 41 of relative beam 16 by means of a pair of screws 42.

Body 52 and portion 53 of each link 36, 38 are interposed along path P between relative ends 50, 51.

Links 36, 38 are alternate to another, proceeding along path P of conveyor chain 4.

Lateral ends 41 of each beam 16 are, in the embodiment shown, arranged on respective opposite sides of crossbars 21 with respect to seats 17.

Surfaces 45, 47 slide onto supporting structures 22, as chain conveyor 4 advances along work branch W of path P.

In the embodiment shown, portions 53 are arranged on the opposite side of relative beams 16 with respect to corresponding seats 17.

Advantageously, chain conveyor 4 comprise a pair of sensors 60, which are configured to generating a signal, which is associated to the radial gap due to the wear between inner surface 30 of each roller 25 and outer surface 31 of corresponding bush 26.

Furthermore, chain conveyor 4 comprises a human machine interface 61 (only schematically shown in Figures 3 and 4) which is functionally connected to sensor 60 and is configured to generate a warning signal in case the radial wear exceeds a threshold value, without interrupting the operation of chain conveyor 4.

Preferably, the warning signal is generated in advance with respect to a critical solution, in order to leave the operator the time to order a new chain conveyor 4. The human machine interface shows the result of a calculation done by a control unit, possibly of the washing unit 1 and connected to the at least one sensor 60, said calculation consisting in assessing the current wear status, possibly as described below, monitoring its evolution over time of production, and predicting a future breakage, before which a maintenance operation must be taken.

Chain conveyor 4 comprises, in the embodiment show, a sensor 60 for one chain 5 and another sensor 60 for the other chain 5.

With reference to Figures 3 and 4, sensor 60 generates a signal corresponding to a distance H between a fixed point 62 of sensor 60 and surface 45 of links 35.

Distance H is measured orthogonally to path P and axes A.

As evident from Figure 3 and 4, distance H depends on the radial gap due to wear between surfaces 31, 32.

Still more precisely, distance H increases while wear between surfaces 30, 31 increases.

As matter of fact, distance H equals value L when diameter De1 of inner surface 31 of rollers 25 equals diameter di1 of outer surface 30 of corresponding bushes 26, i.e. when the wear between rollers 25 and relative axles or bushes 26 is neglectable (Figure 3).

When, due to the operation of chain conveyor 4, diameter De2 of inner surface 31 is smaller than diameter De1 and diameter di2 of outer surface 30 is greater than diameter di1, distance H detected by sensor 51 equals:

$$L+0.5[(di2-di1)+(De1-De2)].$$

In greater detail, sensor 60 is arranged along descending portion S of return branch R.

Chain conveyor 4 comprises a supporting element 81 (Figures 1 and 2), which is arranged on the opposite side of chain conveyor 4 with respect to sensor 60.

In the embodiment shown, sensor 60 is an optical sensor, preferably a laser sensor.

Preferably, sensor 60 operates according to a triangulation technique, i.e. evaluates distance H on the basis of:

- the distance detected between two points on surface 45 on each links 37 and the fixed point 62 of sensor 51; and
- the angle between the segments connecting the two points on each link 37 and the fixed point 62 on surface and sensor 51.

Alternatively, sensor 60 could be an inductive or a magnetic sensor.

The operation of chain conveyor 4 is described with reference to only one beam 16.

Beam 16 cyclically travels along path P inside washing unit

In particular, beam 16 is fed with articles 2 to be cleaned at input station I by infeed conveyor 8, advances articles 2 inside washing tunnel 3 along work branch Q, discharges cleaned articles at output station O onto outfeed conveyor 14 and returns along return branch R without articles 2.

In particular, as chain conveyor 4 advances, rollers 25 of each chain 15 roll over guide 80. In the meanwhile, rollers 25 roll over relative axles or bushes 26 about relative axes A.

The wear effect due to the relative rolling movement of innersurfaces 30 of rollers 25 with respect to respective outersurfaces 31 of corresponding axles or bushes 26 causes an increase in diameter di of innersurfaces 30 of rollers 25 and a decrease in diameter De of outer surfaces 31 of bushes 26 (see Figures 3 and 4). Thus, a radial gap between surfaces 30, 31 is generated due to the wear effect.

As they are advanced along work portion Q, articles 2 pass through bath 11, 12, 13 filled with cleaning agent and are sprayed by sprinkling devices 10 of rinsing zone 6.

As they are advanced along descending portion S of return branch R, sensor 60 detects distance H between a fixed point 62 of sensor 60 and surface 45 of links 35 of chains 15.

It is therefore possible to constantly monitor the residual lifetime of chain conveyor 4. A possible calculation therefor has been described earlier.

In case distance H is greater than a threshold value, human machine interface 61 generates a warning signal, without interrupting the operation of chain conveyor 4.

Preferably, the warning signal is generated in advance with respect to a critical solution, in order to leave enough time to order and deliver a new chain conveyor 4.

From an analysis of the features of chain conveyor 4 and of the method according to the present invention, the advantages it allows to obtain are apparent.

In particular, sensor 60 is configured to generate a signal which is associated to the radial gap generated by the wear effect between inner surfaces 30 of rollers 25 and outer surfaces 31.

In this way, when the radial gap exceeds a threshold value, a warning signal is generated, well before breakage occurs, without interrupting the operation of chain conveyor 4.

In particular, the warning signal can be generated when the lifetime of chain conveyor 4 is still long enough to wait for order and the delivery of a new chain conveyor 4.

It is therefore possible to constantly monitor the residual lifetime of chain conveyor 4, without interrupting the operation thereof.

As a result, the amount of time along which the operation of washing unit 1 is interrupted is dramatically reduced, with a strong benefit in the throughput of washing unit 1 and of downstream filling and labelling unit.

Furthermore, sensor 60 detects distance H between fixed point 62 and surfaces 45 of links 35, which are connected to relative bushes 26. Due to the fact that links 35 substantially do not undergo wear effects, the measure of radial gap is particularly reliable.

In addition, surfaces 45 of links 35 slide onto structures 22, as they travel along path Q and, are, therefore, particularly cleaned.

Accordingly, it is dramatically reduced the risk that some dirty substance could remain onto surfaces 45 and penalize the reliability of the measure carried out by sensor 60.

Sensor 60 is arranged at portion S of return path R, i.e. in a position without water, temperature variation and chemicals agents. Thus, the measure of sensor 60 is particularly reliable.

Finally, sensor 60 can be easily applied onto existing washing unit 1, without substantially modification of the latter.

Clearly, changes may be made to the chain conveyor 4 and method as described and illustrated herein without, however, departing from the scope of protection as defined in the accompanying claims.

**Claims**

1. A chain conveyor (4) for conveying a plurality of empty articles (2) along a path (P), comprising:

   - a plurality of rollers (25) adapted to roll onto a guide (80) and about an axis (A);
   - a plurality of axles about which said respective rollers (25) are rotatably mounted, like bushes (26);
   - a plurality of first and second links (35; 36, 38) for connecting respective pairs of subsequent axles or bushes (26); and
   - a plurality of conveying beams (16) for said articles (2), which are supported at least indirectly by said relative axles or bushes (26);
each said roller (25) comprising a radially inner surface (30) which rotates, in use, onto a radially outer surface (31) of said respective axle or bush (26); and

   comprising a sensor (60), which is configured for generating a signal, which is associated to the radial gap due to the wear between said inner surface (30) of said roller (25) and said outer surface (31)of said bush (26),
   **characterized in that** the sensor (60) senses the distance (H) between said sensor (60) and reference surface (45) directly or indirectly connected to relative said axles or bushes (26)such that said signal generated by said sensor (60) is associated to the distance (H) between said sensor (60) and reference surfaces (45) directly or indirectly connected to relative said axles or bushes (26); said reference surfaces (45) being carried by said first links (35) and being radially opposite to said relative axles or bushes (26), and
   said distance (H) being measured orthogonally to said path (P) and said axes (A).

2. The chain conveyor of claim 1, **characterized in that** said first links (35) are arranged on one axial side of respective pair of subsequent axles or bushes (26); said axial side being opposite to said relative conveying beam (16) with respect to said relative roller (25); said second links (36, 38) being fixed to said relative conveying beams (16).

3. The chain conveyor of any one of the foregoing claims, **characterized by** comprising a human machine interface (61), which is functionally connected to said sensor (60) and is configured to display a warning message in case said radial gap exceeds a threshold value.

4. The chain conveyor of any one of the foregoing claims, **characterized in that** said path (P) comprises:

   - an input station (I), at which said chain conveyor (4) is, in use, fed with said articles (2) to be conveyed;
   - an output station (O), at which said chain conveyor (4) outputs, in use, said conveyed articles (2);
   - a work branch (Q), which extends from said input station (I) to said output station (O); and
   - a return branch (R), which extends from said output station (I) to said input station (O);

said sensor (60) being fixed with respect to said path (P) and being located at said return branch (R).

5. The chain conveyor of claim 4, **characterized in that** said return branch (R) comprises a portion (S), which extends as of said output station (O) and is, in use, descending;
said sensor (60) being located in front of said portion (S).

6. The chain conveyor of any one of the previous claims, **characterized in that** said sensor (60) is an optical sensor, a magnetic sensor or an inductive sensor.

7. The chain conveyor of claim 6, **characterized in that** said sensor is an optical laser sensor.

8. A washing unit (1) for treating empty articles (2), comprising:

   - at least one treatment station (5) with a bath (11, 12, 13) fillable with a liquid treatment agent;
   - a rinsing station (6) for rinsing said washed articles (2);
   - a chain conveyor (4) according to any one of the foregoing claims, and
   - a guide (80) onto which the rollers (25) of said chain conveyor (4) roll; and

   said chain conveyor (4) being adapted to advance said articles (2) to be cleaned, in use, across said bath (11, 12, 13).

9. The unit of claim 8, **characterized by** comprising :

   - a wheel (7) cooperating with said conveyor chain (4); and
   - a fixed structure (22), which is arranged immediately downstream of said wheel (7), according to the advancing direction of said articles (2) along said path (P) and is adapted to support said conveyor chain (4);

   said fixed structure (22) cooperating with said reference surface (45) of said first link (35), as said chain conveyor (4) advances, in use, along said path (P).

10. A method for detecting the wear condition of a chain conveyor (4) according to claim 1 for conveying a plurality of articles (2) along a path (P);

   said method comprising the step i) of sensing the radial gap due to wear between said inner surface (30) and said outer surface (31), wherein said step i) comprises the step ii) of sensing the distance (H) between said sensor (60) and reference surfaces (45) which are directly or indirectly connected to said axles or bushes (26), wherein said step ii) comprises the step iii) of sensing distance (H) between said sensor (60) and reference surface (45) of said first links (35), which are radially opposite to said axle or bushes (26).

11. The method of claim 10, comprising the steps of:

   iv) feeding said articles (2) to said chain conveyor (4) at an input station (I) of said path (P) ;
   v) advancing said chain conveyor (4) along a work branch (Q) from said input station (I) to an output station (O);
   vi) discharging said articles (2) at said output station (O);
   vii) advancing said chain conveyor (4) along a return branch (R) from said output station (O) to said input station (I);

   said step i) comprising the step viii) of sensing said radial gap during said step vii).

**Patentansprüche**

1. Kettenförderer (4) zum Fördern einer Mehrzahl leerer Artikel (2) entlang eines Pfads (P), umfassend:

   - eine Mehrzahl von Rollen (25), die dazu ausgelegt sind, auf einer Führung (80) und um eine Achse (A) zu rollen;
   - eine Mehrzahl von Achsen, um welche die jeweiligen Rollen (25) drehbar montiert sind, wie Hülsen (26);
   - eine Mehrzahl von ersten und zweiten Gliedern (35; 36, 38) zum Verbinden jeweiliger Paare von aufeinanderfolgenden Achsen oder Hülsen (26); und
   - eine Mehrzahl von Förderbalken (16) für die Artikel (2), die zumindest indirekt durch die relativen Achsen oder Hülsen (26) gestützt sind;
   wobei jede Rolle (25) eine radial innere Fläche (30) umfasst, die sich in Verwendung auf einer radial äußeren Fläche (31) der jeweiligen Achse oder Hülse (26) dreht; und
   umfassend einen Sensor (60), der zum Erzeugen eines Signals ausgelegt ist, das mit dem radialen Spalt aufgrund des Verschleißes zwischen der inneren Fläche (30) der Rolle (25) und der äußeren Fläche (31) der Hülse (26) assoziiert ist,
   **dadurch gekennzeichnet, dass** der Sensor (60) den Abstand (H) zwischen dem Sensor (60) und einer Referenzfläche (45), die direkt oder indirekt mit den relativen Achsen oder Hülsen (26) verbunden ist, derart erfasst, dass das durch den Sensor (60) erzeugte Signal mit dem Abstand (H) zwischen dem Sensor (60) und Referenzflächen (45), die direkt oder indirekt mit den relativen Achsen oder Hülsen (26) verbunden sind, assoziiert ist; wobei die Referenzflächen (45) durch die ersten Glieder (35) getragen sind und radial entgegengesetzt zu den relativen Achsen oder Hülsen (26) sind, und wobei der Abstand (H) orthogonal zu dem Pfad (P) und den Achsen (A) gemessen wird.

2. Kettenförderer nach Anspruch 1, **dadurch gekennzeichnet, dass** die ersten Glieder (35) auf einer axialen Seite eines jeweiligen Paars von aufeinanderfolgenden Achsen oder Hülsen (26) angeordnet sind; wobei die axiale Seite entgegengesetzt zu dem relativen Förderbalken (16) in Bezug auf die relative Rolle (25) ist;
wobei die zweiten Glieder (36, 38) an den relativen Förderbalken (16) fixiert sind.

3. Kettenförderer nach einem der vorhergehenden Ansprüche, **dadurch gekennzeichnet, dass** er eine Mensch-Maschine-Schnittstelle (61) umfasst, die funktional mit dem Sensor (60) verbunden ist und dazu ausgelegt ist, eine Warnmeldung anzuzeigen, falls der radiale Spalt einen Schwellenwert überschreitet.

4. Kettenförderer nach einem der vorhergehenden Ansprüche, **dadurch gekennzeichnet, dass** der Pfad (P) Folgendes umfasst:

   - eine Eingabestation (I), an der dem Kettenförderer (4) in Verwendung die zu fördernden Artikel (2) zugeführt werden;
   - eine Ausgabestation (O), an der der Kettenförderer (4) in Verwendung die geförderten Artikel (2) ausgibt;
   - einen Arbeitszweig (Q), der sich von der Eingabestation (I) zu der Ausgabestation (O) erstreckt; und
   - einen Rücklaufzweig (R), der sich von der Ausgabestation (I) zu der Eingabestation (O) erstreckt;

   wobei der Sensor (60) in Bezug auf den Pfad (P) fixiert ist und an dem Rücklaufzweig (R) angeordnet ist.

5. Kettenförderer nach Anspruch 4, **dadurch gekennzeichnet, dass** der Rücklaufzweig (R) einen Abschnitt (S) umfasst, der sich von der Ausgabestation (O) erstreckt und in Verwendung abfällt;
wobei der Sensor (60) vor dem Abschnitt (S) angeordnet ist.

6. Kettenförderer nach einem der vorherigen Ansprüche, **dadurch gekennzeichnet, dass** der Sensor (60) ein optischer Sensor, ein magnetischer Sensor oder ein induktiver Sensor ist.

7. Kettenförderer nach Anspruch 6, **dadurch gekennzeichnet, dass** der Sensor ein optischer Lasersensor ist.

8. Wascheinheit (1) zum Behandeln leerer Artikel (2), umfassend:

   - mindestens eine Behandlungsstation (5) mit einem Bad (11, 12, 13), das mit einem flüssigen Behandlungsmittel befüllbar ist;
   - eine Spülstation (6) zum Spülen der gewaschenen Artikel (2);
   - einen Kettenförderer (4) nach einem der vorhergehenden Ansprüche, und
   - eine Führung (80), auf der die Rollen (25) des Kettenförderers (4) rollen; und

   wobei der Kettenförderer (4) dazu eingerichtet ist, die zu reinigenden Artikel (2) in Verwendung über das Bad (11, 12, 13) vorzuschieben.

9. Einheit nach Anspruch 8, **dadurch gekennzeichnet, dass** sie Folgendes umfasst:

   - ein Rad (7), das mit dem Kettenförderer (4) zusammenwirkt; und
   - eine feststehende Struktur (22), die unmittelbar stromabwärts des Rads (7) gemäß der Vorschubrichtung der Artikel (2) entlang des Pfades (P) angeordnet ist und dazu eingerichtet ist, die Förderkette (4) zu stützen;

   wobei die feststehende Struktur (22) mit der Referenzfläche (45) des ersten Glieds (35) zusammenwirkt, während sich der Kettenförderer (4) in Verwendung entlang des Pfads (P) vorschiebt.

10. Verfahren zum Detektieren des Verschleißzustands eines Kettenförderers (4) nach Anspruch 1 zum Fördern einer Mehrzahl von Artikeln (2) entlang eines Pfads (P); wobei das Verfahren den Schritt i) Erfassen des radialen Spalts aufgrund von Verschleiß zwischen der inneren Fläche (30) und der äußeren Fläche (31) umfasst, wobei der Schritt i) den Schritt ii) Erfassen des Abstands (H) zwischen dem Sensor (60) und Referenzflächen (45), die direkt oder indirekt mit den Achsen oder Hülsen (26) verbunden sind, umfasst, wobei der Schritt ii) den Schritt iii) Erfassen eines Abstands (H) zwischen dem Sensor (60) und einer Referenzfläche (45) der ersten Glieder (35), die radial entgegengesetzt zu der Achse oder den Hülsen (26) sind, umfasst.

**11.** Verfahren nach Anspruch 10, umfassend die folgenden Schritte:

iv) Zuführen der Artikel (2) zu dem Kettenförderer (4) an einer Eingabestation (I) des Pfads (P);
v) Vorschieben des Kettenförderers (4) entlang eines Arbeitszweigs (Q) von der Eingabestation (I) zu einer Ausgabestation (O);
vi) Ausstoßen der Artikel (2) an der Ausgabestation (O);
vii) Vorschieben des Kettenförderers (4) entlang eines Rücklaufzweigs (R) von der Ausgabestation (O) zu der Eingabestation (I);

wobei der Schritt i) den Schritt viii) Erfassen des radialen Spalts während des Schritts vii) umfasst.

## Revendications

**1.** Transporteur à chaîne (4) pour transporter une pluralité de articles vides (2) le long d'un chemin (P), comprenant :

- une pluralité de galets (25) adaptés pour rouler sur un guide (80) et autour d'un axe (A) ;
- une pluralité d'essieux autour desquels lesdits galets respectifs (25) sont montés de façon rotative, comme des douilles (26) ;
- une pluralité de premières et secondes liaisons (35 ; 36, 38) pour relier des paires respectives d'essieux subséquents ou de douilles subséquentes (26) ; et
une pluralité de poutres de transport (16) pour lesdits articles (2), qui sont supportées au moins indirectement par lesdits essieux relatifs ou lesdites douilles relatives (26) ;
chaque dit galet (25) comprenant une surface radialement intérieure (30) qui entre en rotation, durant l'utilisation, sur une surface radialement extérieure (31) dudit essieu respectif ou de ladite douille respective (26) ; et
comprenant un capteur (60), qui est configuré pour générer un signal, qui est associé à l'espace radial dû à l'usure entre ladite surface intérieure (30) dudit galet (25) et ladite surface extérieure (31) de ladite douille (26),
**caractérisé en ce que** le capteur (60) détecte la distance (H) entre ledit capteur (60) et une surface de référence (45) directement ou indirectement reliée auxdits essieux relatifs ou auxdites douilles relatives (26) de telle sorte que ledit signal généré par ledit capteur (60) soit associé à la distance (H) entre ledit capteur (60) et les surfaces de référence (45) directement ou indirectement reliées auxdits essieux relatifs ou auxdites douilles relatives (26) ; lesdites surfaces de référence (45) étant portées par lesdites premières liaisons (35) et étant radialement opposées auxdits essieux relatifs ou auxdites douilles relatives (26), et
ladite distance (H) étant mesurée orthogonalement audit chemin (P) et auxdits axes (A).

**2.** Transporteur à chaîne selon la revendication 1, **caractérisé en ce que** lesdites premières liaisons (35) sont agencées sur un côté axial d'une paire respective d'essieux subséquents ou de douilles subséquente (26) ; ledit côté axial étant opposé à ladite poutre de transport relative (16) par rapport audit galet relatif (25) ;
lesdites secondes liaisons (36, 38) étant fixées auxdites poutres de transport relatives (16).

**3.** Transporteur à chaîne selon l'une quelconque des revendications précédentes, **caractérisé en ce qu'**il comprend une interface homme-machine (61), qui est fonctionnellement connectée audit capteur (60) et est configurée pour afficher un message d'avertissement au cas où ledit espace radial dépasse une valeur seuil.

**4.** Transporteur à chaîne selon l'une quelconque des revendications précédentes, **caractérisé en ce que** ledit chemin (P) comprend :

- un poste d'entrée (I), auquel ledit transporteur à chaîne (4) est, durant l'utilisation, alimenté en lesdits articles (2) destinés à être transportés ;
- un poste de sortie (O), auquel ledit transporteur à chaîne (4) sort, durant l'utilisation, lesdits articles transporté (2) ;
- une branche de travail (Q), qui s'étend depuis ledit poste d'entrée (I) jusqu'audit poste de sortie (O) ; et
- une branche de retour (R), qui s'étend depuis ledit poste de sortie (I) jusqu'audit poste d'entrée (O) ;

ledit capteur (60) étant fixé par rapport audit chemin (P) et étant situé sur ladite branche de retour (R).

**5.** Transporteur à chaîne selon la revendication 4, **caractérisé en ce que** ladite branche de retour (R) comprend une partie (S), qui s'étend depuis ledit poste de sortie (O) et est, durant l'utilisation, descendante ;
ledit capteur (60) étant situé devant ladite partie (S).

**6.** Transporteur à chaîne selon l'une quelconque des revendications précédentes, **caractérisé en ce que** ledit capteur (60) est un capteur optique, un capteur magnétique ou un capteur inductif.

**7.** Transporteur à chaîne selon la revendication 6, **caractérisé en ce que** ledit capteur est un capteur laser optique.

8.  Unité de lavage (1) pour traiter des articles vides (2), comprenant :

    - au moins un poste de traitement (5) avec un bain (11, 12, 13) remplissable avec un agent de traitement liquide ;
    - un poste de rinçage (6) pour rincer lesdits articles lavés (2) ;
    - un transporteur à chaîne (4) selon l'une quelconque des revendications précédentes, et
    - un guide (80) sur lequel les galets (25) dudit transporteur à chaîne (4) roulent ; et

    ledit transporteur à chaîne (4) étant adapté pour faire avancer lesdits articles (2) destinés à être nettoyés, durant l'utilisation, à travers ledit bain (11, 12, 13).

9.  Unité selon la revendication 8, **caractérisée par** comprenant :

    - une roue (7) coopérant avec ladite chaîne de transporteur (4) ; et
    - une structure fixe (22), qui est agencée immédiatement en aval de ladite roue (7), selon la direction d'avance desdits articles (2) le long dudit chemin (P) et est adaptée pour supporter ladite chaîne de transporteur (4) ;
    ladite structure fixe (22) coopérant avec ladite surface de référence (45) de ladite première liaison (35), au fur et à mesure que ledit transporteur à chaîne (4) avance, durant l'utilisation, le long dudit chemin (P).

10. Procédé pour détecter la condition d'usure d'un transporteur à chaîne (4) selon la revendication 1 pour transporter une pluralité d'articles (2) le long d'un chemin (P) ;

    ledit procédé comprenant l'étape i) de la détection de l'espace radial dû à l'usure entre ladite surface intérieure (30) et ladite surface extérieure (31),
    dans lequel
    ladite étape i) comprend l'étape ii) de la détection de la distance (H) entre ledit capteur (60) et des surfaces de référence (45) qui sont directement ou indirectement reliées auxdits essieux ou auxdites douilles (26), dans lequel ladite étape ii) comprend l'étape iii) de la détection de la distance (H) entre ledit capteur (60) et une surface de référence (45) desdites premières liaisons (35), qui sont radialement opposées auxdits essieux ou auxdites douilles (26).

11. Procédé selon la revendication 10, comprenant les étapes de :

iv) l'alimentation, en lesdits articles (2), audit transporteur à chaîne (4), à un poste d'entrée (I) dudit chemin (P) ;
v) l'avance dudit transporteur à chaîne (4) le long d'une branche de travail (Q) depuis ledit poste d'entrée (I) jusqu'à un poste de sortie (O) ;
vi) le déchargement desdits articles (2) audit poste de sortie (O) ;
vii) l'avance dudit transporteur à chaîne (4) le long d'une branche de retour (R) depuis ledit poste de sortie (O) jusqu'audit poste d'entrée (I) ;

ladite étape i) comprenant l'étape viii) de la détection dudit espace radial durant ladite étape vii).

FIG. 1

FIG. 2

EP 3 342 734 B1

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2727760 A
- US 2444925 A
- JP H10300426 B
- US 20120186613 A1